# DEMANDE DE BREVET EUROPEEN

(11) **EP 2 743 210 A1**
(43) Date de publication de la demande: **18.06.2014**
(21) Numéro de dépôt: 13196942.0
(22) Date de dépôt: 12.12.2013
(51) Int. Cl.: B65D 90/10

(54) **Procédé de fixation d'un couvercle d'orifice de citerne en matériau composite et citerne correspondante**

(30) Priorité: 13.12.2012 FR 1261983
(71) Demandeur: Etablissements MAGYAR, 21000 Dijon (FR)
(72) Inventeur: Magyar, Daniel, 75012 PARIS (FR); Magyar, Laurent, 75001 PARIS (FR)
(74) Mandataire: Breesé, Pierre

(57) **Abrégé**

L'invention vise à réaliser, dans le cas d'un conditionnement en matériau composite, une solidarisation des supports d'articulation du couvercle sans insert, afin de s'affranchir des inconvénients générés par ces éléments. Pour ce faire, l'invention prévoit une pièce de fixation desdits supports autour de la rehausse tubulaire.

Un exemple de citerne en matériau composite (2) selon l'invention est équipée d'au moins un orifice d'accès (100) ayant une rehausse cylindrique (12) fermée par un couvercle (100). Le couvercle (100) est articulé sur la rehausse (12) par une charnière de pivotement (130) et est maintenu fermé par des boulons basculants (140) agencés le long de la circonférence du couvercle (100). La charnière (130) et les boulons basculants (140) comportent des axes d'articulation (133, 143) montés sur des supports (13a, 14a). La rehausse (12) est enserrée dans au moins un collier de serrage (15) et les supports d'articulation (13a, 14a) de la charnière (130) et des boulons basculants (140) sont solidarisés au collier (15).

## Description

### DOMAINE TECHNIQUE

L'invention concerne un procédé de fixation d'un couvercle d'orifice de citerne en structure composite, en particulier un trou d'homme. L'invention se rapporte également à une citerne en structure composite équipée d'au moins un orifice d'accès fermé par un couvercle, et s'applique plus particulièrement, mais non exclusivement, à une citerne de transport de produits liquides.

L'invention peut s'appliquer en effet à tout type de citerne pour stocker et/ou transporter des matériaux, en particulier aux citernes semi-remorques ou remorques de véhicules de transport de liquide, aux conteneurs et réservoirs fixes, dans les domaines du transport, du bâtiment, du recyclage ou équivalent.

Classiquement, les citernes comportent une cuve métallique doublée d'un renfort annulaire de type profilé creux. Plus récemment, des structures composites ont été adoptées pour constituer des cuves de citerne. Ces structures composites se composent d'un matériau hétérogène à base de fibres de carbone ou de verre et de résine, formant des peaux. Ces peaux sont en général empilées en sandwich avec des couches de renfort (polyuréthane, balsa, polypropylène, ..), pouvant être conformées en nid d'abeille. Les structures composites présentent en effet de nombreux avantages en termes de poids, de résistance et de durée de vie par rapport aux alliages métalliques utilisés auparavant.

Les citernes sont en général équipées d'orifices d'accès, en particulier d'orifices de visite appelés trous d'homme, ou d'autres orifices dédiés à des fonctions spécifiques (introduction de sonde, de tuyau de récupération de déchets ou de nettoyage, etc.). Le trou d'homme permet de contrôler le contenu de la cuve sans la vider et d'effectuer des prélèvements pour l'analyse de ce contenu. Il permet aussi de pénétrer dans la citerne pour effectuer ces contrôles, analyses, ainsi que d'autres vérifications et réparations.

Les orifices d'accès sont équipés de couvercles articulés pour permettre leur ouverture en mode opérationnel ou leur fermeture en mode de stockage ou de transport.

### ETAT DE LA TECHNIQUE

Chaque couvercle est articulé autour d'une charnière de pivotement et maintenu fermé par des boulons basculants agencés le long de la circonférence du couvercle. La charnière et les boulons comportent des axes d'articulation montés sur des supports. Ces supports sont constitués d'une embase terminée par deux oreilles montées sur la rehausse tubulaire de l'orifice.

Lorsque les citernes sont métalliques, les supports d'articulation sont directement soudés à la rehausse tubulaire de l'orifice d'accès qui est également métallique.

Dans un conditionnement en matériau composite, les supports d'articulation des charnières et des boulons sont solidarisés sur la rehausse tubulaire par vissage dans des inserts préalablement intégrés au matériau composite.

Cependant, un tel montage présente des inconvénients car les inserts compliquent les travaux de stratification du matériau composite l'introduction d'inserts lors de la stratification des fibres : des problèmes de mise en place surgissent et une étape particulière est intégrée dans le procédé de fabrication, cette étape augmentant la durée et les coûts de réalisation. De plus, une fois le montage des supports d'articulation réalisé, l'utilisation d'inserts ne garantit pas une tenue invariable des supports. En effet, les supports et les inserts s'inclinent dans le temps en fonction du sens d'ouverture du couvercle.

### EXPOSE DE L'INVENTION

L'invention vise à réaliser, dans le cas d'un conditionnement en structure composite, une solidarisation des supports d'articulation du couvercle sans insert, afin de s'affranchir des inconvénients générés par ces éléments. Pour ce faire, l'invention prévoit une pièce de fixation desdits supports autour de la rehausse tubulaire.

Plus précisément, la présente invention a pour objet un procédé de fixation d'un couvercle d'orifice de citerne en structure composite, en particulier un trou d'homme, l'orifice ayant une rehausse cylindrique et le couvercle étant articulé sur la citerne par une charnière et maintenu fermé par basculement de moyens également articulés sur le conditionnement. Dans ce procédé, un cerclage est mis en place sous tension mécanique autour de la rehausse, et les articulations de la charnière et des moyens basculants sont fixées sur le cerclage enserrant la rehausse.

Avantageusement, l'invention permet de garantir une tenue des moyens d'articulation invariable quel que soit le sens d'ouverture du couvercle, vers l'extérieur ou l'intérieur, et quelle que soit l'angle d'orientation de la charnière dans le plan horizontal de l'orifice.

Selon des modes de réalisation préférés :
- le cerclage est constitué d'au moins un tenant ;
- les moyens basculants sont régulièrement répartis autour du couvercle afin de maintenir le couvercle uniformément fermé.

L'invention se rapporte également à une citerne en structure composite, en particulier une citerne de transport, équipée d'au moins un orifice d'accès ayant une rehausse cylindrique fermée par un couvercle. Le couvercle est articulé sur la rehausse par une charnière de pivotement et est maintenu fermé par des boulons basculants agencés le long de la circonférence du couvercle. La charnière et les boulons basculants comportent des axes d'articulation montés sur des supports. Dans cette citerne, la rehausse est enserrée dans au moins un collier de serrage et les supports d'articulation de la charnière et des boulons basculants sont fixés sur le collier.

Selon des modes de réalisation préférés :
- le mode de fixation des supports d'articulation est choisi parmi le soudage, le collage, le clinchage, le sertissage et le rivetage ;
- chaque support d'articulation est constitué d'une embase terminée par des oreilles traversées par un axe d'articulation ;
- le collier est constitué d'au moins un seul tenant, une extrémité de chaque (ou du tenant) étant liée à une extrémité d'un autre tenant (ou respectivement du même tenant) via des moyens de mise sous tenson mécanique ajustable ;
- les moyens de mise sous tension mécanique ajustable sont choisis parmi une attache à boulons, une pince de serrage, un pot de serrage et une prise de mors.

### PRESENTATION DES FIGURES

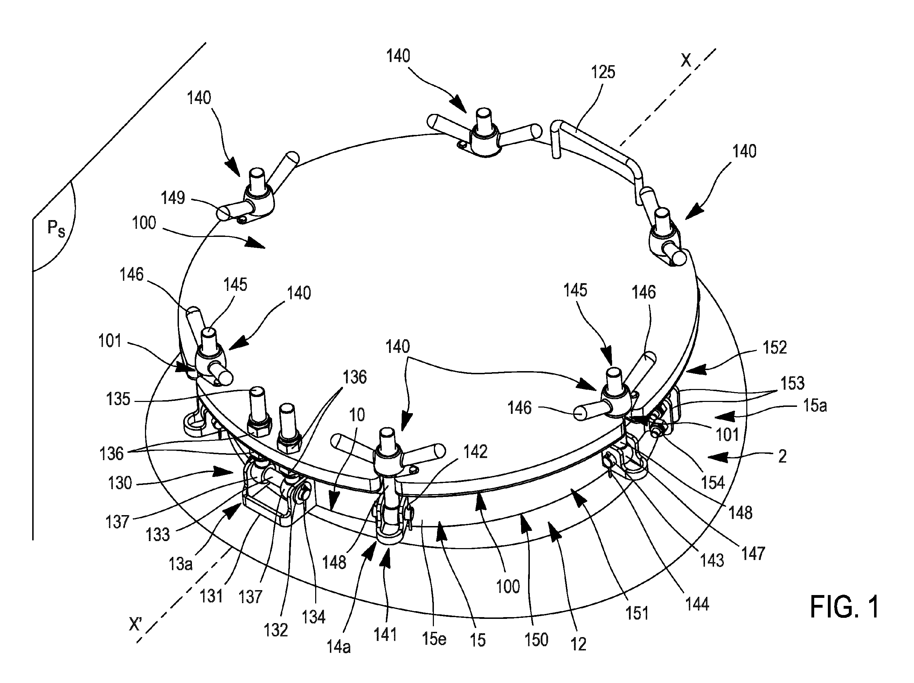

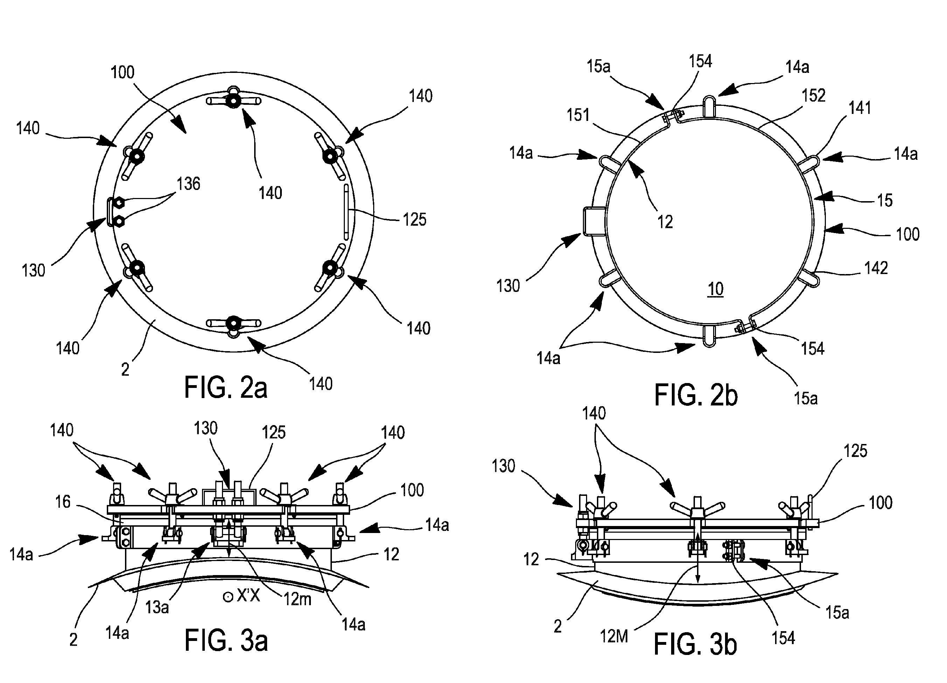

D'autres aspects et particularités de la mise en oeuvre de l'invention apparaîtront à la lecture de la description détaillée qui suit, accompagnée de dessins annexés qui représentent, respectivement :
- en figure 1, une vue perspective d'un exemple de trou d'homme dans une citerne équipée d'un couvercle muni de supports d'articulation de charnière et de boulons basculants selon l'invention;
- en figures 2a et 2b, des vues de dessus et de dessous du couvercle muni d'une charnière et de boulons basculants selon la figure 1 ; et
- en figures 3a et 3b, des vues latérales respectivement selon l'axe longitudinal de la citerne et orthogonalement à cet axe.

### DESCRIPTION DETAILLEE

Des signes de référence identiques ou dérivés, utilisés dans les différentes figures, se rapportent à des éléments identiques, décrits dans les passages qui s'y réfèrent. Les termes « supérieur », « médian » et « inférieur » se réfèrent au positionnement relatif en mode standard d'utilisation ou de montage. Les termes « longitudinal » et « transversal » qualifient des éléments s'étendant selon une direction et un plan perpendiculaire à cette direction, en particulier « longitudinal » renvoie à l'axe principal X'X dans lequel s'étend la citerne.

En référence à la vue en perspective d'un exemple de réalisation de l'invention de la figure 1, un couvercle 100 de trou d'homme 10 est agencé sur la rehausse cylindrique 12 de ce trou d'homme 10. Le trou d'homme 10 est, dans l'exemple, formé au faîte de la citerne 2, avec un plan de symétrie « Ps » du trou d'homme passant par l'axe longitudinal X'X de la citerne. Le couvercle 100 est équipé de moyens de traitement du liquide transporté par la citerne ÷
- une poignée 125 agencée de manière diamétralement opposée à une charnière 130 d'articulation du couvercle 100 sur le trou d'homme 10.

La charnière 130 comporte :
- un support d'articulation 13a constitué d'une embase 131, en position horizontale en mode d'utilisation, terminée par deux oreilles 132 dressées verticalement ;
- un axe d'articulation 133 montée dans les oreilles et fixé par une goupille 134 à chaque extrémité de l'axe 133 ;
- deux vis à oeil 135, verrouillées de part et d'autre du couvercle 100 par des écrous 136, et terminées par des anneaux 137 montés en rotation sur l'axe 133.

De plus, le couvercle 100 est fermé de manière amovible par six boulons basculants 140. Ces boulons basculants 140 sont accueillis dans des encoches 101, formées sur la circonférence du couvercle 100 selon une répartition régulière. Chaque boulon basculant 140 comporte :
- un support d'articulation 14a constitué d'une embase 141, en position horizontale en mode d'utilisation, terminée par deux oreilles 142 dressées verticalement ;
- un axe d'articulation 143 montée dans les oreilles et fixé par une goupille 144 à chaque extrémité de l'axe 143 ;
- une vis à oeil 145 munie d'une manette à deux bras 146 ; la vis 145 est terminée par un anneau 147 monté en rotation sur l'axe 143, après avoir traversée une platine 148 équipée d'une vis de serrage à tête hexagonale 149.

Selon l'exemple de réalisation illustré par la figure 1, la rehausse 12 est enserrée dans un collier de serrage métallique 15 constitué de deux demi-colliers 151 et 152. Les demi-colliers 151 et 152 sont reliés entre eux par une attache ajustable 15a. Dans l'exemple, l'attache 15a est constituée de deux pattes de réglage ajourées 153, formées à l'extrémité des demi-colliers, et de deux boulons de serrage 154 traversant les pattes ajourées 153. La tension entre les demi-colliers 151 et 152 est donc ajustée par le serrage des boulons 154.

Les oreilles 132, 142 et les embases 131, 141 des supports d'articulation 13a, 14a, respectivement de la charnière 13 et de chaque boulon basculant 14, sont solidarisés à la face externe 15e de la paroi cylindrique 150 du collier de serrage 15. Dans l'exemple illustré, les supports d'articulation 13a, 14a sont soudés à la face externe 15e du collier de serrage 15. Alternativement, ces supports de serrage 13a, 14a peuvent être collés, avec une colle appropriée au collage métal/métal, ou peuvent être rivetés, clinchés ou encore sertis dans la paroi cylindrique 150.

La vue de dessus de la figure 2a met en évidence la répartition régulière des boulons basculants 140 le long de la circonférence du couvercle 100, séparés les uns des autres par un secteur angulaire de 60°. Cette vue met également en lumière le caractère diamétralement opposé du positionnement, entre deux boulons basculants 140, de la charnière 130 et de la poignée 125 d'ouverture du couvercle 100.

La vue de dessous de la figure 2b illustre plus particulièrement l'extension radiale des supports 13a et 14a de la charnière 130 et des boulons basculants 140 autour du collier de serrage 15. Cette vue montre également que les attaches 15a des demi-colliers 151 et 152 sont localisées de manière diamétralement opposé, et que les boulons d'ajustage 154 ont des sens de vissage opposés.

La vue latérale selon l'axe longitudinal X'X de la figure 3a illustre la forme convexe du faîte de la citerne 2 en liaison avec la forme cylindrique de la rehausse 12 du trou d'homme 1. Il apparaît que la hauteur de la rehausse 12 passe par un minimum 12m au niveau du faîte de la citerne. Cette figure 3a, ainsi que la vue orthogonale à l'axe longitudinal X'X de la figure 3b, montrent l'étendue des supports d'articulation 13a et 14a sur le collier de serrage 15, en particulier sur quasiment toute la hauteur 15h du collier 15.

Le collier 15 est avantageusement disposé sous un rebord 16 formé en extrémité de la réhausse 12 afin de positionner les supports d'articulation de manière uniforme sous ce rebord 16.

La figure 3b détaille également la liaison entre la forme « concave » en perspective du faîte de la citerne 2 vu selon l'angle de cette figure et la forme cylindrique de la rehausse 12 du trou d'homme 1. La hauteur de la rehausse 12 passe par une valeur maximale 12M dans le plan orthogonal au plan de symétrie Ps (cf. figure 1). Avantageusement, la hauteur du collier 15 est proche de la valeur minimale 12m.

L'invention n'est pas limitée aux exemples de réalisation décrits et représentés. Le cerclage de la rehausse peut être également réalisé par un joint ou une gaine cylindrique. Il est possible de prévoir d'autres dispositifs de fermeture amovible que les boulons basculants, par exemple des crochets ou des clips de fixation amovibles. Par ailleurs, le collier de serrage peut être constitué d'un seul tenant avec des moyens de serrage entre ses extrémités, de deux demi-colliers - comme dans l'exemple détaillé - ou de plus de deux demi-colliers. En outre, les moyens de serrage ajustable peuvent être constitués de pince de serrage, de pots de serrage ou de prise de mors.

## Revendications

1. Procédé de fixation d'un couvercle (100) d'orifice (10) de citerne (2) en matériau composite, en particulier un trou d'homme, l'orifice ayant une rehausse cylindrique (12) et le couvercle (100) étant articulé sur le conditionnement par une charnière (130) et maintenu fermé par basculement de moyens (140) également articulés sur la citerne (2) ce procédé étant **caractérisée en ce qu'**un cerclage (15) est mis en place sous tension mécanique autour de la rehausse (12), et les articulations de la charnière (130) et des moyens basculants (140) sont fixées sur le cerclage (15) enserrant la rehausse (12).

2. Procédé de fixation selon la revendication 1, dans lequel le cerclage est constitué d'au moins un tenant.

3. Procédé de fixation selon l'une des revendication 1 ou 2, dans lequel les moyens basculants (140) sont régulièrement répartis autour du couvercle (100) afin de maintenir le couvercle uniformément fermé.

4. Citerne en structure composite, en particulier citerne de transport (2), équipée d'au moins un orifice d'accès (100) ayant une rehausse cylindrique (12) fermée par un couvercle (100), le couvercle (100) étant articulé sur la rehausse (12) par une charnière de pivotement (130) et maintenu fermé par des boulons basculants (140) agencés le long de la circonférence du couvercle (100), la charnière (130) et les boulons basculants (140) comportant des axes d'articulation (133, 143) montés sur des supports (13a, 14a), la citerne étant **caractérisée en ce que** la rehausse (12) est enserrée dans au moins un collier de serrage (15) et les supports d'articulation (13a, 14a) de la charnière (130) et des boulons basculants (140) sont solidarisés au collier (15).

5. Citerne selon la revendication précédente, dans laquelle des supports d'articulation (13a, 14a) sont fixés selon un mode de fixation choisi parmi le soudage, le collage, le clinchage, le sertissage et le rivetage.

6. Citerne selon l'une des revendications 4 ou 5, dans laquelle chaque support d'articulation (13a, 14a) est constitué d'une embase (131, 141) terminée par des oreilles (132, 142) traversées par un axe d'articulation (133, 143).

7. Citerne selon l'une quelconque des revendications 4 à 6, dans laquelle le collier (15) est disposé sous un rebord (16) formé en extrémité de la réhausse (12) afin de positionner les supports d'articulation de manière uniforme sous ce rebord (16).

8. Citerne selon l'une des revendications 4 à 6, dans laquelle le collier (15) est constitué d'au moins un seul tenant, une extrémité de chaque (ou du) tenant (151, 152) étant liée à une extrémité d'un autre tenant (ou respectivement du même tenant) via des moyens de mise sous tenson mécanique ajustable (15a).

9. Citerne selon la revendication précédente, dans laquelle les moyens de mise sous tension mécanique ajustable sont choisis parmi une attache à boulons (15a), une pince de serrage, un pot de serrage et une prise de mors.
